# EUROPEAN PATENT SPECIFICATION

(11) **EP 1 389 395 B1**
(45) Date of publication and mention of the grant of the patent: **11.07.2007**
(21) Application number: 02730419.5
(22) Date of filing: 14.05.2002
(51) Int. Cl.: H04Q 3/00

(54) **SERVICE APPLICATION ARCHITECTURE FOR INTEGRATED NETWOK SERVICES PROVIDERS**
DIENST APPLIKATIONSARCHITEKTUR FÜR DIENSTENANBIETER VON INTEGRIERENDE KOMMUNIKATIONSNETZWERKEN
ARCHITECTURE D'APPLICATIONS DE SERVICE DESTINEE A DES FOURNISSEURS DE SERVICES RESEAUX INTEGRES

(30) Priority: 24.05.2001 US 864696; 18.06.2001 US 884577; 18.06.2001 US 884576; 18.06.2001 US 884578; 18.06.2001 US 884497; 18.06.2001 US 884575
(43) Date of publication of application: 18.02.2004
(73) Proprietor: International Business Machines Corporation, Armonk, NY 10504 (US)
(72) Inventor: CREAMER, Thomas, Boca Raton, FL 33428 (US); KALLNER, Samuel, Winchester Hampshire SO21 2JN (GB); LOZINSKI, Zygmunt, Anthony, Papworth Everard, Cambridgeshire CB3 8GT (GB); MOORE, Victor, Boynton Beach, FL 33436 (US); SHACHOR, Gal, Yokneam (IL); VORTMAN, Pnina, 34467 Haifa (IL); WALTERS, Glen, Hollywood, FL 33021 (US)
(74) Representative: Ling, Christopher John
(86) International application number: PCT/GB2002/002250
(87) International publication number: WO 2002/098097

(56) References cited:
- WO-A-01/28186
- CHE-LIANG YANG ET AL: "The design and implementation of a service logic execution environment platform" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 November 1993 (1993-11-29), pages 1911-1917, XP010109974 ISBN: 0-7803-0917-0

## Description

### Field of the Invention

This invention relates to the field of advanced intelligent networks and more particularly to a service application architecture for integrated network service providers.

### Background of the Invention

The development of the open network application programming interface (API) represents an important departure from traditional methods for opening the architecture of the public switched telephone network (PSTN). One such open network API, the Advanced Intelligent Network (AIN) API and architecture, defines a call model which allows the creation of telecommunications service applications outside of the switch environment. Telecommunications service applications are a' la carte telecommunications applications which can perform enhanced services for a telecommunications session established among two or more parties. Exemplary services applications can include Call Waiting, Caller ID, Call Forwarding, Voice Activated Dialing, and Meet-me Conferencing.

When AIN first had been introduced, in terms of the service application creation process, the AIN architecture represented an important advance. AIN separated service development from switching, allowing service logic components to be developed more quickly and placed in specialized network elements attached to databases. Switches, in turn, being free from all service logic, could be optimized for speed and efficiency. Still, typical service applications developed to the AIN specification are written in specialized languages by specially trained programmers using specialized service creation environments.

Importantly, future telecommunications networks will be characterized by new and evolving network architectures where packet-switched, circuit-switched, and wireless networks are integrated to offer subscribers an array of innovative multimedia, multiparty applications. Equally important, it is expected that the process by which telecommunications applications are developed will change, and will no longer solely be the domain of the telecommunications network or service application provider. In fact, in order to provide a broad portfolio of novel, compelling applications rapidly, service application providers will increasingly turn to third-party applications developers and software vendors. Thus, application development in the telecommunications domain will become more similar to that in software and information technology in general, with customers reaping the benefits of increased competition, reduced time to market, and the rapid leveraging of new technology as it is developed.

To make this vision a reality, the principles of AIN have been discarded in favor of a new service application component development paradigm. Specifically, it has been recognized that future integrated networks must offer application developers a set of standard, open APIs so that applications written for compatibility with one vendor's system can execute in the system of another vendor. In consequence, the cost of applications development can be amortized, reducing the final cost to the customer. Java APIs for Integrated Networks (JAIN) fulfills the requirements of the new service application component development paradigm. Presently, JAIN includes standard, open, published Java APIs for next-generation systems consisting of integrated Internet Protocol (IP) or asynchronous transport mode (ATM) networks, PSTN, and wireless networks. The JAIN APIs include interfaces at the protocol level, for different protocols such as Media Gateway Control Protocol (MGCP), Session Initiation Protocol (SIP), and Transactional Capabilities Application Part (TCAP), as well as protocols residing in the higher layers of the telecommunications protocol stack.

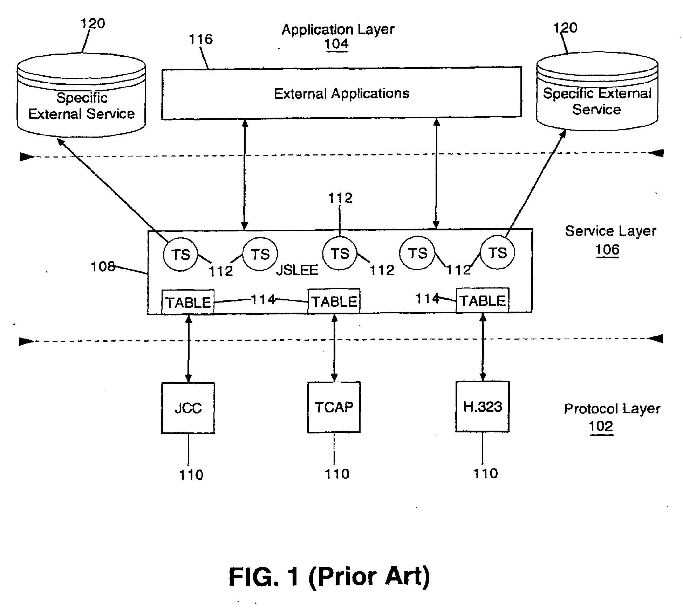

JAIN includes a set of integrated network APIs for the Java platform and an environment to build and integrate JAIN components into services or applications that work across PSTN, packet and wireless networks. The JAIN approach integrates wireline, wireless, and packet-based networks by separating service-based logic from network-based logic. Figure 1 illustrates a conventional JAIN implementation. As shown in Figure 1, a conventional JAIN implementation can include a protocol layer 102 which can include interfaces to IP, wireline and wireless signaling protocols. Though only TCAP, JCC and H.323 protocols 110 are shown, the protocols supported by the JAIN specification are not limited to particular protocols and can include, for example, TCAP, ISUP, INAP, MAP, SIP, MGCP, and H.323. Moreover, the JAIN implementation can include an interface to a connectivity management and call control protocol such as JCC.

In addition to the protocol layer 102, the conventional JAIN implementation also can include an application layer 104 for handling secure network access and other external services 120. Also, the conventional JAIN implementation can include a service logic layer 106 which can include a service creation and carrier grade service logic execution environment (SLEE) 108. Service components 112 are the core JAIN components and can execute in the SLEE 108. More particularly, service components 112 can implement telephony and network services and can be constructed according to a standard component model. Instances of service component assemblies execute in coordination with the SLEE 108.

In operation, using information regarding the protocol layer 102 which can be incorporated into the SLEE 108, service components 112 can interact with an underlying protocol stack 110 without having specific knowledge of the protocol stack 110. More importantly, the SLEE 108 can relieve the service components 112 of conventional lifecycle responsibilities by providing portable support for transactions, persistence, load balancing, security, and object and connection instance pooling. In this way, the service components 112 can focus on providing telephony and/or network services. Notably, the SLEE 110 can be communicatively linked directly to client components such as external applications 116, protocol stacks 110 and service components 112.

For example, service components 112 executing at the service logic layer 106 in the SLEE 108 can communicate with protocol stacks 110 in the protocol layer through protocol adapters in the SLEE 108. Protocol adapters typically can include class methods, callbacks, encapsulating interfaces, or event handlers. In many cases, an underlying protocol stack 110 can directly communicate with the SLEE 108 through an event table 114 in the SLEE 108 which can be configured to specifically handle events which are particular to the underlying protocol stack 110. In consequence, the SLEE 108 can recognize those particular events, and upon receipt of such an event from the underlying protocol stack 110, the SLEE 108 can pass the event to a subscribing service component 112. Also, service components 112 can be individually programmed to interact with specific external services 120, such as relational databases, directory services, etc.

Despite the apparent advantages of the JAIN specification, however, conventional implementations of the JAIN specification include some drawbacks. particularly in their application to real-time telephony. First, the SLEE of conventional JAIN implementations incorporate an Enterprise Javabean® (EJB) approach which includes unnecessary system housekeeping chores, for example lifecycle responsibilities. Lifecycle responsibilities, however, are not as critical in the real-time telephony domain as they are in other communications domains. Thus, the use of EJBs can introduce too many latencies to satisfy the demands of real time operations. Additionally, in order to relieve service components of the complexities of the protocol stacks, the SLEE requires specific knowledge of the underlying protocol stacks as will be apparent from corresponding event tables which can be used to facilitate communications between the SLEE and an underlying protocol stack. Including specific client component information in the SLEE, however, can add unnecessary complexity to the SLEE. From a life-cycle maintenance perspective this can be problematic. Also, including client component information in the SLEE unnecessarily directly binds the SLEE to particular client components. Finally, directly binding the SLEE to particular client components can require the positioning of the application layer, protocol layer and the service logic layer in close computing proximity to one another.

Communicating with a service component in the SLEE also can be problematic for external applications. In particular, an external application must be programmatically bound to those service components in the SLEE with which the external application can communicate. This problem can be compounded where the external application is distributed across a computer communications network such as the Internet. Accordingly, any attempt to integrate services or other functionality available via the Internet, including the World Wide Web, must be implemented using a separate, proprietary system.

Notably, in accordance with the JAIN specification, the development of a wireless service application requires knowledge of many disparate communications interfaces and protocols for accessing wireless services. For example, presently, a variety of disparate communications protocols exist which support the use of the wireless network. These protocols can include Global System for Mobile Communication (GSM), General Packet Radio Service (GPRS), Enhanced Data GSM Environment (EDGE), Universal Mobile Telecommunications System (UTMS), Wireless Application Protocol (WAP), Mobile Access Protocol (MAP), and i-Mode.

In order to develop a wireless service application, a developer must be familiar with the particular wireless protocol interface corresponding to the wireless service or function being incorporated into the wireless service application being developed. For example, WAP is a specification for a set of communication protocols which standardizes wireless device communications. Thus, one developing a service application for wireless services for handheld devices would need at least a general familiarity with WAP to successfully develop such a service application.

Similarly, a service application developer desiring to provide an application service providing interactive use of a web site through a wireless handheld device likely would need to be familiar with GPRS which can provide a higher data rate than WAP. Solutions such as GPRS and WAP can facilitate the interoperability of various devices and services, as well as minimize the use of proprietary solutions. Still, to develop a variety of wireless service applications, a developer must be familiar with an assortment of wireless protocols and interfaces. Accordingly, the number persons having the necessary expertise in using different wireless communications protocols and interfaces can be limited.

Similar to the difficulties faced in developing wireless service application, the development of a telecommunications service applications also requires knowledge of many disparate communications interfaces and protocols for accessing service application and functions. For example, service applications such as call blocking or call forwarding, in addition to service components for accessing the call model, can require access to directory services or other proprietary databases for accessing information to implement the call model. Access to directory services, however, can require specific knowledge of the lightweight directory access protocol (LDAP). By comparison, access to any particular database can require knowledge of DB2, MQSeries, or another proprietary database access protocol.

Typically, the knowledge required to implement a wireless application using a particular protocol can be so highly specialized that only one person may have the necessary expertise within a given organization. This personnel dilemma often means that each time a solution is developed for one particular wireless format, the solution is not easily ported over to a different wireless format or protocol. Moreover, because programming expertise can be so highly specialized, porting a service application to another format or protocol typically requires additional personnel possessing expertise within the target format or protocol.

Thus, the highly specialized nature of telephony service application development can result in increased developmental expenses and longer design cycles. Further, the complexities involved make recycling and maintenance of systems, features, and applications extremely difficult. For example, because the protocol and logic necessary to access a particular service functionality are included within the service application being developed, any changes to an underlying protocol can necessitate reprogramming of the entire service application. In sum, the highly specialized nature of wireless service application development can result in increased developmental expenses and longer design cycles. Further, the complexities involved make recycling of systems, features, and applications extremely difficult. Hence, what is needed is a more flexible service application architecture for integrated network service providers.

WO 01/28186 A to Broadsoft Inc. discloses a system for providing services which includes service entities, interface entities and a service bus. The service bus couples the interface entities and the service entities and passes events between the interface entities and service entities.

### SUMMARY OF THE INVENTION

According to a first aspect the present invention provides an application execution environment according to cl. 1.

Preferably, the application execution environment further comprises at least one generic service component executing in the SLEE. The generic service component can be configured to communicate with other service camponents in the SLEE. The generic service component also can be configured to communicated with specific external services in the application layer.

Preferably, the application execution environment further comprises at least one telephony component executing in said SLEE, said telephony component configured to communicate with client components in the protocol layer and other service components in the service logic layer through said event routing bus in said SLEE.

Preferably, the connector/wrapper interface comprises a client component wrapper, the client component wrapper providing an abstracted interface to a client component in the protocol layer; and, a connector associated with the SLEE, the connector corresponding to the client component wrapper, wherein the connector is configured to communicate with the client component through the abstracted interface provided by the client component wrapper.

Preferably, the application execution environment further comprises a SLEE descriptor, the SLEE descriptor specifying at least one client component with which the SLEE can be configured to communicate through a connector/wrapper interface.

Preferably, the application execution environment further comprises at least one client component descriptor, each client component descriptor corresponding to a specific client component in the protocol layer, the at least one client component descriptor specifying particular events for which the specific client component can be notified by the event routing bus in the SLEE.

Preferably, the client component is a protocol stack. Alternatively, the client component can be a call-control component, a signalling protocol component, a connectivity management protocol component, or a secure network access protocol component.

Preferably, the SLEE is a JAIN-compliant SLEE.

Preferably, the SLEE further comprises a class loader for loading service components in the SLEE, the SLEE registering each loaded service component to receive events directed to particular registered service components; said event routing bus routing said received events to said particular registered service components executing in the SLEE.

Preferably, the SLEE further comprises a thread pool; and a thread pool manager for allocating threads for use by said loaded service components.

According to a second aspect the present invention provides a telephony services provisioning method according to claim 12.

According to a third aspect, the present invention provides a machine readable storage, having stored thereon,a computer program for provisioning telephony services, said computer program having program code executable by a machine for causing the machine to perform a method according to the second aspect.

According to a fourth aspect, the present invention provides a service logic execution environment (SLEE) in an intelligent network model, said SLEE comprising a class loader for loading service components in the SLEE, the SLEE registering each loaded service component to receive events directed to particular registered service components, and an event routing bus for receiving events from a protocol layer and other service components, said event routing bus routing said received events to said particular registered service components executing in the SLEE.

According to a fifth aspect the present invention provides an application execution environment for an intelligent network comprising: a service logic execution environment (SLEE) at least one client component wrapper, said at least one client component wrapper providing an abstracted interface for a specific client component; and at least one connector associated with said SLEE, said at least one connector corresponding to at least one client component wrapper, wherein said connector is configured to communicate with a client component through an abstracted interface provided by said corresponding at least one client component wrapper.

According to a sixth aspect the present invention provides an advanced intelligent network for use with a wireless service comprising: a service logic execution environment (SLEE); at least one service application executing in said SLEE; and at least one generic service component for use with a wireless service application communicatively linked to said service application, said generic service component comprising an interface to said wireless service application which is external to said SLEE.

According to a seventh aspect the present invention provides an advanced intelligent network for use with a call model comprising: a service logic execution environment (SLEE); at least one service application executing in said SLEE; and at least one generic service component communicatively linked to said service application, said generic service component comprising an interface to a second service application which is external to said SLEE.

According to an eight aspect the present invention provides a data processing system for an intelligent network comprising: A service logic layer comprising a service logic execution environment (SLEE); A protocol layer comprising at least one client component, wherein said at least one client component is communicatively linked to said SLEE through a connector/wrapper interface, and wherein said SLEE comprises an event routing bus for routing events between service components in the service logic layer and client components in a protocol layer and an application layer; and at least one telephony service component executing in said SLEE, said telephony component configured to communicate with client components in the protocol layer and other service components in the service logic layer through said event routing bus in said SLEE.

The present invention thus provides a flexible service application architecture for integrated network service providers. The present invention addresses the deficiencies of the prior art by providing more direct processing of events by the service components and by reducing protocol stack specific code contained in the service logic execution environment (SLEE). Additionally, the present invention addresses the deficiencies of the prior art by removing specific client component information from the SLEE and substituting therefor a connector/wrapper communications interface. As a result, the SLEE can generically transmit and receive communications through the connector/wrapper interface regardless of the implementation details of the underlying client components. Hence, in accordance with the present invention, the complexity of the SLEE can be reduced. Moreover, a SLEE configured in accordance with the present invention need not be directly bound to particular client components.

Preferably, the architecture of the present invention includes generic service components which can be configured to communicate with specific external services while providing a generic interface to other service components executing in the SLEE. In this way, service components executing in the SLEE, for example telephony service components, can generically request external services such as database operations from the generic service component. Responsive to receiving a generic request for an external service, the generic service component can invoke one or more functions specific to a corresponding specific external service in order to provide the requested external service to the requesting telephony service component. Consequently, telephony service components need not incorporate specific code directed to a specific external service. Rather, only the generic service component need incorporate specific code directed to the specific external service. Thus, the complexity of the telephony service components can be reduced.

### BRIEF DESCRIPTION OF THE DRAWINGS

The present invention will now be described, by way of example only, with reference to a preferred embodiment thereof, as illustrated in the accompanying drawings, in which:
Figure 1 is a schematic representation of an intelligent network architecture configured in accordance with a conventional JAIN implementation known in the prior art;
Figure 2 is a schematic representation of an intelligent network architecture including a service logic execution environment (SLEE);
Figure 3 is a detailed illustration of a telephony service component configured for execution in the SLEE of Figure 2;
Figure 4 is a detailed illustration of a generic service component configured for execution in the SLEE of Figure 2;
Figure 5 is a block diagram of a collection of generic service components configured to access service applications in the application layer of the intelligent network architecture of Figure 2; and
Figure 6 is a flow chart illustrating a method for establishing a communications link between a client component and the SLEE of Figure 2 through a connector/wrapper interface.

### DETAILED DESCRIPTION OF THE PREFERRED EMBODIMENT

The present invention is a flexible service application architecture for integrated network service providers. The architecture can be similar to an advanced intelligent network architecture (AIN) inasmuch as the architecture can have a protocol layer, service logic layer and an application layer. In accordance with the inventive arrangements, the architecture of the present invention can include a service logic execution environment (SLEE) in the service logic layer. Notably, the SLEE can be a JAIN-compliant SLEE. The SLEE can include an event routing bus for routing events between service components in the service logic layer and client components in the protocol layer and application layer. In particular, telephony service components executing in the SLEE can be configured to communicate with client components in the protocol layer and other service components in the service logic layer through the event routing bus in the SLEE. Finally, client components can be communicatively linked to the SLEE through a connector/wrapper interface.

The incorporation of a SLEE configured in accordance with a preferred embodiment of the present invention helps to solve the deficiencies of the prior art by providing an event routing bus which can facilitate inter-service component event communications. By providing more direct event communications, the inherent latencies associated with the EJB approach of the JAIN specification can be reduced. Also, unlike conventional implementations of a SLEE in which service components only can receive and process events received from a client component such as a protocol stack via the SLEE, in a preferred embodiment of the present invention, service components also receive and process events from other service components. Thus, advanced combinations of service components can be created to form macro service components.

Also, service components can be constructed to include specific knowledge of a particular protocol stack. In consequence, the specific knowledge of the particular protocol stack can be removed from the SLEE, thereby reducing the complexity of the SLEE. As a result, in a SLEE of a preferred embodiment of the present invention, new protocol stacks are added to the intelligent network without requiring a re-coding of the SLEE because service components can be created to include specific knowledge of the added protocol stack. Once dynamically inserted into the SLEE, other service components can access the new protocol stack through the inserted service component via the event routing bus. Unlike prior art intelligent networks in which inter-service component communications are not possible, in a preferred embodiment of the present invention, it is inter-service component communications which makes the simplified addition of new protocol stacks possible.

The architecture of the present invention also can include a connector/wrapper interface for communicatively linking the SLEE to client components in the protocol layer. The connector/wrapper interface between the SLEE and client components in the protocol layer also can help to solve the deficiencies of the prior art by providing a configurable connection through a generic interface to a specific client component without inflexibly binding the client component to the SLEE.

Unlike conventional implementations of a SLEE in which the SLEE is directly bound to client components with which the SLEE communicates, in a preferred embodiment of the present invention, the SLEE and client component need not be positioned proximately to one another. Rather, the SLEE and client component can be positioned across a network, if need be. In this way, a more flexible association between client component and SLEE is possible which can facilitate the maintenance and enhancement of the SLEE during life-cycle maintenance. Moreover, the specific knowledge of a particular client component can be removed from the SLEE and included, instead in the interface to the client component. As a result, the complexity of the SLEE can he reduced.

Finally, a preferred embodiment of the present invention includes generic service components for providing an abstracted interface to a specific external services. More particularly, while each generic service component can maintain an awareness of a particular implementation of a specific external service, other service components, particularly telephony service components executing in the SLEE, can generically request external services of the generic service component without knowing the particular implementation of a corresponding specific external service. In this way, the complexity of service components can be reduced and the service components can be de-coupled from specific implementations of external services.

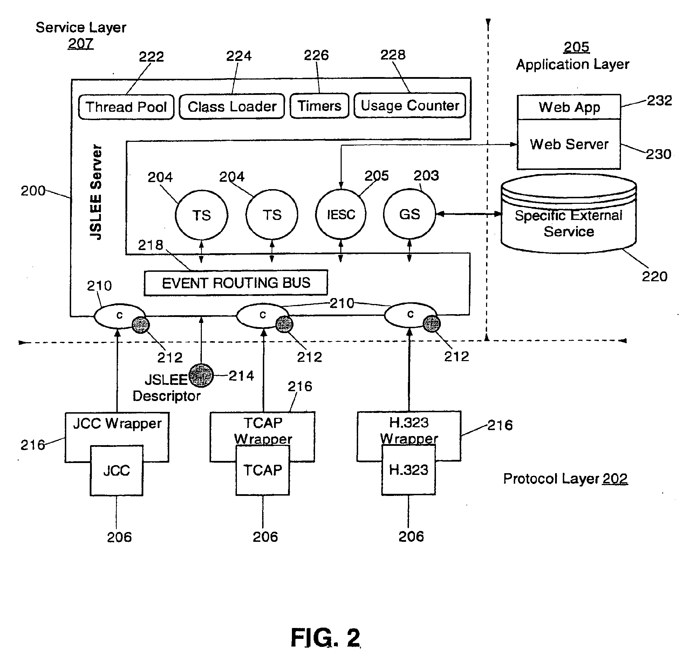

Figure 2 is a schematic illustration of a JAIN-compliant intelligent network configured in accordance with a preferred embodiment of the present invention. A JAIN-compliant network is configured to include a protocol layer 202, an application layer 205 and a service logic layer 207. The application layer 205 can host external third party applications 208. Typical third party applications 208 can suit mass-market demand for services such as virtual private networks (VPNs), inbound services and unified messaging. External third party applications 208 also can include short-lived and niche applications which can be deployed using un-trusted application space deployment technologies such as database lookup interfaces, downloadable mechanisms, and the Parlay API, as are well known in the art. Finally, specific external services 220, such as database services, directory services and wireless services, can be included in the application layer 205.

The service logic layer 207 can include a SLEE server such as a JSLEE Server 200 which can be configured for compatibility with the JAIN specification. Importantly, the JSLEE Server 200 can include an event routing bus 218. The event routing bus 218 can receive and transmit messages between service components 203, 204, 205. Specifically, service components 203, 204, 205 can be configured to post messages to the event routing bus 218 and service components 203, 204, 205 can register with the JSLEE Server 200 to receive such posted events from other service components 203, 204, 205. In this way, inter-service component communications can be made possible. Further, service components 203, 204, 205 can be configured to receive events from external applications 208 via the event routing bus 218. Also, those events which are received from external applications 208 and posted to the event bus 208 can be routed to other service components 203, 204, 205 that have registered to receive such events.

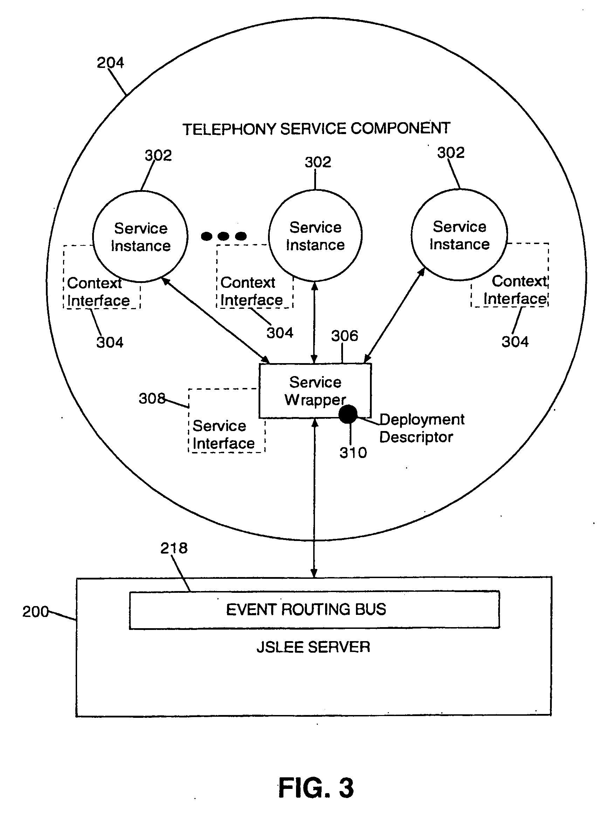

The service components 203, 204, 205 can include telephony service components 204, generic service components 203 and Internet service components 205. Figure 3 is a schematic representation of a telephony service component 204 configured for use in the JSLEE Server 200 of Figure 2. As shown in Figure 3, the telephony service component 204 can include one or more service instances 302. Service instances 302 are individually instantiated services which can execute in the JSLEE 200. More importantly, each service instance 302 can register with the event routing bus 218 to receive and transmit events to the protocol layer 202 as well as other telephony and generic service components 203, 204, 205.

Each service instance 302 can be accessed through service wrapper 306 which insulates the details of the service instance implementation. More particularly, data and method members of the service class can be accessed through a common interface contained in the service wrapper 306. A deployment descriptor 310 also can be provided. The deployment descriptor 310 can be a document, for instance an XML document, which can describe proper parameters for initially loading an instance of the service component 302 in the JSLEE Server 200. Notably, an interface to the service wrapper 306 can be published to external objects through a service interface 308 which can be included as part of an XML document, for example. Likewise, an interface to each service instance 302 can be included as part of a context interface 304, which also can be published as part of an XML document, for example. Once loaded, service instances 302 can communicate via the event routing bus 218 in the JSLEE Server 200.

To avoid including code in the telephony service components 204 for accessing specific external services 220 such as proprietary and relational database services and directory services, generic service components 203 can be incorporated in the architecture of the present invention. Generic service components 203 can provide an abstracted interface to specific external services 220 and can respond specifically to generic requests from other service components 203, 204, 205 to interact with the specific external services 220. Notably, generic service components 203 can provide a common API for accessing service applications such as wireless services, directory services, database services, or messaging services.

In fact, a generic service component 203 can be built for each different service application. Moreover, a generic service component 203 can be built for each different protocol used by a service application. Thus, as shown in Figure 2, a plurality of generic service components 203 can be included, each corresponding to a service application or protocol. For example, a different generic service component 203 can be built for LDAP, DB2, and for MQSeries based services or functions. Likewise, a different generic service component 203 can be built for accessing wireless service applications such as those utilizing Global System for Mobile Communication (GSM), General Packet Radio Service (GPRS), Enhanced Data GSM Environment (EDGE), Universal Mobile Telecommunications System (UTMS), WAP, Mobile Access Protocol (MAP), and i-Mode. Hence, the inclusion of generic service components 203 can relieve other service components, particularly telephony service components 204, from incorporating a specific configuration for communicating with specific external services 220.

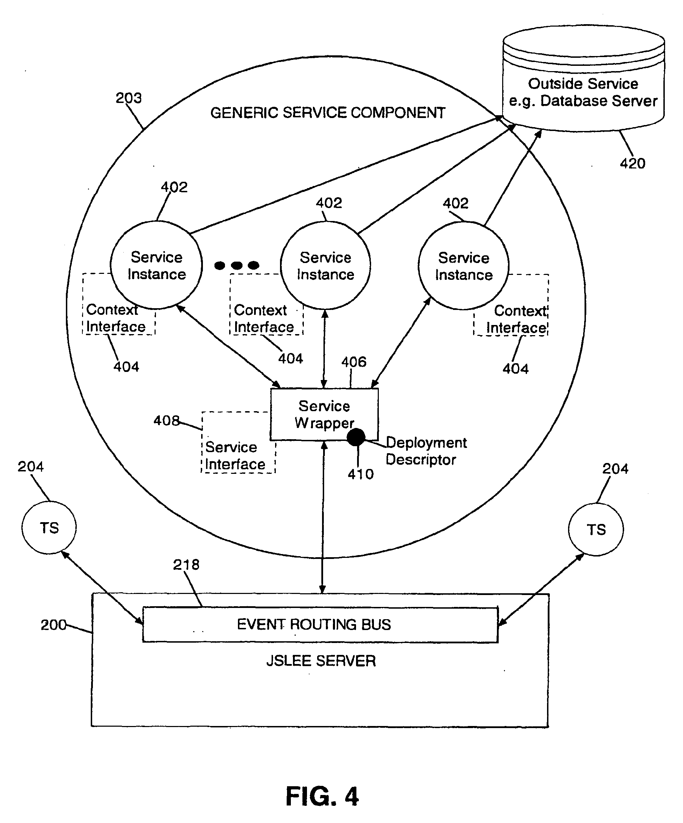

Figure 4 is a schematic representation of a generic service component 203 configured for use in the JSLEE Server 200 of Figure 2. As shown in Figure 4, the generic service component 203 can include one or more generic service instances 402. Like the telephony service instances 302 of Figure 3, the generic service instances 402 of Figure 4 are individually instantiated generic services which can execute in the JSLEE 200. More importantly, each generic service instance 402 can register with the event routing bus 218 to receive and transmit events to and from other service components 203, 204, 205 in the service logic layer 207. As in the case of the telephony service component 204, each generic service instance 402 can be accessed through generic service wrapper 406 which insulates the details of the service instance implementation. More particularly, data and method members of the service class can be accessed through a common interface contained in the generic service wrapper 406.

A deployment descriptor 410 also can be provided. The deployment descriptor 410 can be a document, for instance an XML document, which can describe proper parameters for initially loading an instance of the generic service component 402 in the JSLEE Server 200. Notably, an interface to the generic service wrapper 406 can be published to external objects through a generic service interface 408 which can be included as part of an XML document, for example. Likewise, an interface to each service instance 402 can be included as part of a context interface 404, which also can be published as part of an XML document, for example. Once loaded, generic service instances 402 can communicate via the event routing bus 218 in the JSLEE Server 200.

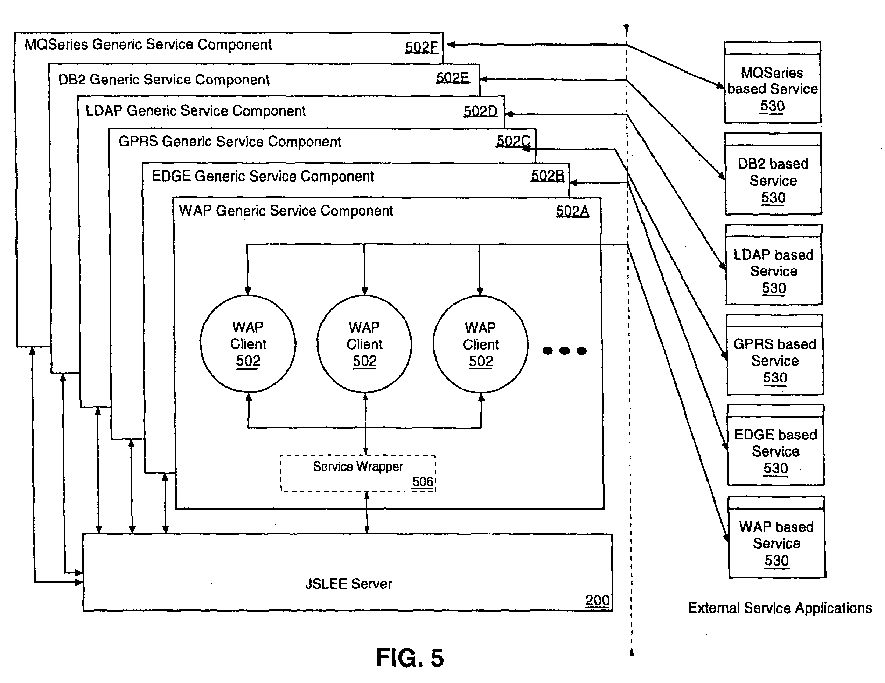

Figure 5 is a simplified pictorial representation of exemplary arrangement of generic service components 502A, 502B, 502C, 502D, 502E, 502F in the JAIN-compliant intelligent network of a preferred embodiment of the present invention. As shown in Figure 5, each generic service component 502A, 502B, 502C, 502D, 502E, 502F can include a service wrapper 506 and one or more client service instances 502. The service wrapper 506 can register with the JSLEE Server 200 to receive a particular type of event corresponding to a service application 530. Accordingly, the service wrapper 506 can include the functionality necessary to translate a received event and reformat that event according to a particular protocol. The reformatted event can be routed to a particular wireless service application. The service wrapper 506 can instantiate a client service instance 502 for processing a particular transaction or one or more events. The client service instance 502 also can be instantiated for communicating with one of service applications 530A, 530B, 530C, 530D, 530E, 530F.

As shown in Figure 5, exemplary generic service components 502A, 502B, 502C, 502D, 502E, 502F can include, but are not limited to, a WAP generic service component 502A, an EDGE generic service component 502B, a GPRS generic service component 502C, an LDAP generic service component 502D, a DB2 generic service component 502E, and an MQSeries generic service component 502F. For example, the service wrapper 506, as part of the WAP generic service component 502A, can register with the JSLEE Server 200 to receive wireless events relating to a wireless device such as a wireless handheld device. As shown in Figure 5, the service wrapper 506 has instantiated three client service instances 502, one for each received event, or series of events comprising a transaction relating to a WAP based wireless service application. Alternatively, a single client service instance 502 can handle multiple transactions. Thus, each client service instance 502 can interact with the WAP based service application 530A.

Similarly, the EDGE generic service component 502B and the MQSeries generic service component 502F each can include a service wrapper and one or more client service instances for interacting with EDGE based wireless service applications 530B and MQSeries message queue service applications 530F, respectively. It should be appreciated that a generic service component can be built for any service application as necessary, including proprietary database and wireless services using proprietary interfaces and protocols.

Returning now to Figure 2, unlike the telephony and generic service components 203, 204, the Internet enabled service components 205 can be pre- configured to communicate with an external server-side program such as a servlet or script. Examples of server side programs can include, but are not limited to, Common Gateway Interface (CGI), Perl scripts, Java^{™} Server Pages, VB scripts, Active Server Pages^{™}, or other scripting technologies. Once an external application 232 has gained access to the Internet enabled service components 205, the Internet enabled service components 205 can provide to the external application 232 access to the event routing bus 218 in the JSLEE Server 200 through which service components 203, 204, 205 can communicate with one another.

Through this mechanism, service components 203, 204, 205 executing in the JSLEE Server 200 also can communicate with the Internet enabled service components 205. Thus, because the Internet enabled service components 205 can be communicatively linked to a server side program 232 executing in association with a Web server 230 in a computer communications network such as the Internet, other service components 203, 204 within the JSLEE Server 200 can utilize the Internet enabled service components 205 to send and receive information over the Internet. Moreover, other service components 203, 204 within the JSLEE Server 200 can be accessed by users and administrators from the Internet.

The Internet enabled service components 205 can be configured to communicate directly with the Web server 230 by sending and receiving requests and responses in accordance with the hyper-text transfer protocol (HTTP). Likewise, the Web server 230 can include server side programs 232 configured to communicate with Internet enabled service components 205 also in accordance with HTTP. Notwithstanding, the invention is not limited in regard to the manner in which the Internet enabled service components 205 and corresponding server side programs communicate. Rather, any known communication technique can suffice including general connection-oriented techniques such as explicit TCP/IP communications.

The combination of server-side programs 232 and the Internet enabled service components 205 enable various aspects of services and service components to be accessed via the Internet through a common application programming interface (API) provided by the Internet enabled service components 205. For example, subscribers can access and modify service attributes. Service attributes can include any subscriber accessible aspect of a service. Similarly, service administrators or super users can access, monitor, and perform administrative functions over the Internet. Administrative functions can include, but are not limited to, any functionality reserved for a system administrator or a super user and not provided to a subscriber. Notably, the Internet enabled service components 205 can provide this access to subscribers and administrators over the Internet without the aid of external services or systems.

Each Internet enabled service components 205, like other service components 203, 204 in the JSLEE Server 200, also can be configured with the ability to receive events and post events to the JSLEE Server 200. In this manner, other service components 203, 204 can be registered with the JSLEE Server 200 to receive such events. Those service components 203, 204 can correspondingly post events to the JSLEE Server for which the Internet enabled service components 205 can be registered to receive. It should be appreciated that the Internet enabled service components 205 can process events received from the JSLEE Server 200 as well as communications received from the Web Server 230. In this manner, the Internet enabled service components 205 can function as an interface between the Internet and the JSLEE Server 200.

Notably, the JSLEE Server 200 also can include several lifecycle management components including a thread pool 222, a class loader 224, timers 226 and usage counters 228. Still, the lifecycle management components are not limited to those shown in Figure 2. Rather, the lifecycle management components can include components able to perform other lifecycle management responsibilities such as load balancing, for example. In any case, in accordance with the inventive arrangements, individual service components are freed from the overhead of performing lifecycle management and can be used more appropriately in telephony applications.

Notably, as shown in Figure 2, the thread pool 222 can include a plurality of pre-configured and loaded execution threads which can be allocated by a thread pool management component, on demand, to requesting service components 203, 204, 205 executing in the JSLEE Server 200. When the requesting service components 203, 204, 205 have completed use of the allocated thread, the thread pool management component can de-allocate the allocated thread and can return the de-allocated thread to the thread pool 222 for use by other requesting service components 203, 204, 205 executing in the JSLEE Server.

The class loader 224 can be used by the JSLEE Server 200 to properly load service components 203, 204, 205 for execution in the JSLEE Server 200. In particular, the class loader 224 can identify configuration and loading parameters associated with each service component 203, 204, 205 to be loaded. Subsequently, the class loader 224 can execute the service components 203, 204, 205 using the identified configuration and loading parameters. Finally, the class loader 224 can register the service components 203, 204, 205 with the event routing bus 218 so that events can be transmitted to and from the service components 203, 204, 205 executing in the JSLEE Server 200.

Finally, the protocol layer 202 can include one or more protocol stacks 206 which can be configured to interact with service components 204 executing in the JSLEE Server 200. Notably, although Figure 2 only depicts three protocol stacks 206, the invention is not limited in regard to the number or type of protocol stacks 206. Rather, JSLEE Server 200 can interact with any protocol stack, for example those protocol stacks configured in accordance with the JAIN specification.

In operation, the JSLEE Server 200 can transmit and receive events to and from the protocol stacks 206 in the protocol layer 202. More particularly, the events can be transmitted and received in the event routing bus 218 included in the JSLEE Server 200. Telephony service components 204 and generic service components 203 can register as listeners for particular events received in the event routing bus 218. Service components 203, 204, 205 which are registered with the JSLEE Server 200 can receive protocol stack events directed towards particular ones of the service components 203, 204, 205. Also, service components 203, 204, 205 can receive service component events directed towards particular ones of the service components 203, 204, 205. More specifically, the event routing bus 218 of the JSLEE Server 200 can route received events to service components 203, 204, 205 which have registered with the JSLEE Server 200 to receive such events.

In accordance with a preferred embodiment of the present invention, the JSLEE Server 200 can be configured to communicate with client components in the JAIN-compliant intelligent network. Client components can include not only the protocol stacks 206, but also other service components 203, 204, 205, specific external services 220, and external applications 208. Importantly, the JSLEE Server 200 can be so configured without having specific knowledge of the implementation of each client component. To accomplish this feat, the JSLEE Server 200 can include connectors 210 which can communicate with wrappers 216 thereby forming a connector/wrapper interface. The wrapper 216 can provide to the connector 210 an abstracted interface for a specific client component such as the protocol stack 206. Each connector 210, in turn, can be configured to communicate with a corresponding client component such as a protocol stack 206 through the abstracted interface provided by the corresponding wrapper 216.

Thus, in general, the JSLEE Server 200 can generically transmit and receive events through the connector/wrapper interface regardless of the implementation details of the underlying client components such as protocol stacks 206. Rather, only the wrapper 216 requires specific knowledge of the implementation details of the underlying protocol stack 206. In one aspect of the present invention, a JSLEE descriptor 214 can be included which can specify individual wrappers 216 with which corresponding connectors 210 can be configured to communicate.

In particular, the JSLEE Server 200, at start-up, can read the JSLEE descriptor 214 to learn the identity of each specified wrapper 216. Subsequently, the JSLEE Server 200 can configure connectors 210 to communicate with the specified wrappers 216. Similarly, client component descriptors 212 can be provided for each connector 210. The client component descriptors 212 can specify particular events for which an associated client component such as a protocol stack 206 can be notified by the event routing bus 218 of the JSLEE Server 200.

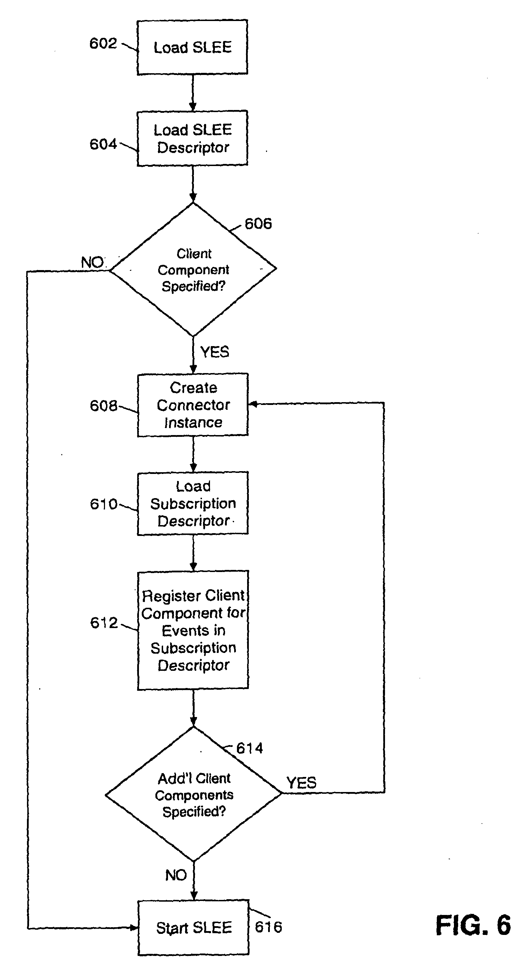

Figure 6 is a flow chart which illustrates a method of communicatively linking a SLEE to a client component in an application execution environment of an integrated network. The method can begin in block 602 in which the SLEE can be loaded. In block 604, a SLEE descriptor can be loaded. If, in decision block 606 a client component is specified, in block 608 a connector instance can be created and configured to communicate with a wrapper associated with the specified client component. In block 610, a subscription descriptor associated with the configured connector can be loaded and in block 612, the specified client component can be registered with an event handler in the SLEE to receive those events listed in the subscription descriptor.

Subsequently, in decision block 614, if additional client components are listed in the SLEE descriptor, additional connector instances can be created and configured in accordance with blocks 608 through 612. Finally, once all connector instances have been created and configured, the SLEE can be started in step 616 and events can be routed to registered client components through the connector/wrapper interface regardless of the underlying implementation of each individual client component. In consequence, the SLEE can be communicatively linked to client components through client component wrappers without requiring the SLEE to have specific knowledge of each client component.

The present invention can be realized in hardware, software, or a combination of hardware and software. A telephony service provisioning method according to the present invention can be realized in a centralized fashion in one computer system, or in a distributed fashion where different elements are spread across several interconnected computer systems. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein.

The present invention also can be embedded in a computer program product, which comprises all the features enabling the implementation of the methods described herein, and which when loaded in a computer system is able to carry out these methods. Computer program means or computer program in the present context means any expression, in any language, code or notation, of a set of instructions intended to cause a system having an information processing capability to perform a particular function either directly or after either or both of the following a) conversion to another language, code or notation; b) reproduction in a different material form.

## Claims

1. An application execution environment for an intelligent network, comprising:
a service logic execution environment, SLEE, in a service logic layer (207) said SLEE comprising an event routing bus (218) for routing events between service components (203, 204, 205) in the service logic layer and client components in a protocol layer (202) and application layer (205);
at least one client component in the protocol layer, wherein said at least one client component is communicatively linked to said SLEE through a connector/wrapper interface (210, 216);
at least one service component configured to communicate with other service components in said SLEE through said event routing bus; and **characterized in that** it comprises
at least one Internet enabled service component, IESC (205) executing in said SLEE, said IESC having a configuration for posting and receiving events to and from other service components in said SLEE through said event routing bus, said IESC having communicative link to a server side program external to said SLEE.

2. The application execution environment of claim 1, wherein at least one service component is a telephony service component (204) executing in said SLEE, said telephony service component further configured to communicate with client components in the protocol layer.

3. The application execution environment of either claim 1 or claim 2 wherein at least one service component is a generic service component (203) executing in said SLEE, wherein said generic service component is further configured to communicate with specific external services in the application layer.

4. The application execution environment of any preceding claim, wherein said connector/wrapper interface comprises:
a client component wrapper, said client component wrapper providing an abstracted interface to a client component in the protocol layer; and,
a connector associated with said SLEE, said connector corresponding to said client component wrapper, wherein said connector is configured to communicate with said client component through said abstracted interface provided by said client component wrapper.

5. The application execution environment of any preceding claim, further comprising:
a SLEE descriptor (214) said SLEE descriptor specifying at least one client component with which said SLEE can be configured to communicate through a connector/wrapper interface.

6. The application execution environment of any preceding claim, further comprising:
at least one client component descriptor, each client component descriptor corresponding to a specific client component in the protocol layer, said at least one client component descriptor specifying particular events for which said specific client component can be notified by said event routing bus in said SLEE.

7. The application execution environment of any preceding claim, wherein said client component is a protocol stack.

8. The application execution environment of any one of claims 1 to 6, wherein said client component is selected from the group consisting of a call-control component, a signaling protocol component, a connectivity management protocol, and a secure network access protocol.

9. The application execution environment of any preceding claim, wherein said SLEE is compliant with the Java API's for Integrated Networks, JAIN, paradigm.

10. The application execution environment of any preceding claim, wherein said SLEE further comprises:
a class loader (224) for loading service components in the SLEE, the SLEE registering each loaded service component to receive events directed to particular registered service components; said event routing bus routing said received events to said particular registered service components executing in the SLEE.

11. The application execution environment of any preceding claim, wherein said SLEE further comprises:
a thread pool (222) and,
a thread pool manager for allocating threads for use by said loaded service components.

12. A telephony services provisioning method comprising the steps of:
in an event routing bus in a service logic execution environment (SLEE),
receiving protocol layer events from client components through a connector/interface wrapper,
receiving service logic layer events from service components executing in said SLEE, and,
forwarding said particular protocol layer events and said service logic layer events to service components and client components registered to receive said particular protocol layer and service logic layer events; and,
wherein at least one service component is an Internet enabled service component, IESC, said IESC:
posting at least one service logic layer event to said event routing bus, wherein said event routing bus can forward said posted service logic layer event to another service component registered to receive said posted service logic layer event;
receiving a service logic layer event from another service component; and,
responsive to receiving said service logic layer event from said another service component, providing a communicative link to a server side program external to said SLEE.

13. A machine readable storage, having stored thereon a computer program for provisioning telephony services, said computer program having program code executable by a machine for causing the machine to perform the steps of claim 12.

## Patentansprüche

1. Umgebung zur Ausführung von Anwendungen für ein intelligentes Netzwerk, wobei die Umgebung Folgendes umfasst:
eine Logikumgebung zur Ausführung von Diensten (SLEE) in einer logischen Dienstschicht (207), wobei die SLEE einen Ereignis-Routing-Bus (218) zum Weiterleiten von Ereignissen zwischen Dienstkomponenten (203, 304, 205) in der logischen Dienstschicht und Client-Komponenten in einer Protokollschicht (202) und einer Verarbeitungsschicht (205) umfasst;
mindestens eine Client-Komponente in der Protokollschicht, wobei die mindestens eine Client-Komponente über eine Verbindungs-/Oberflächenschnittstelle (210, 216) zur Datenübertragung mit der SLEE verbunden ist;
mindestens eine Dienstkomponente, die so konfiguriert ist, dass sie über den Ereignis-Routing-Bus Daten mit anderen Dienstkomponenten in der SLEE austauschen kann; und
**dadurch gekennzeichnet ist, dass**
sie mindestens eine internetfähige Dienstkomponente (IESC) (205) umfasst, die in der SLEE ausgeführt wird, wobei die IESC eine Konfiguration zum Senden und Empfangen von Ereignissen an andere oder von anderen Dienstkomponenten in der SLEE über den Ereignis-Routing-Bus und eine Datenübertragungsverbindung zu einem Server-Zusatzprogramm außerhalb der SLEE aufweist.

2. Umgebung zur Ausführung von Anwendungen nach Anspruch 1, bei der mindestens eine Dienstkomponente eine Fernsprech-Dienstkomponente (204) ist, die in der SLEE ausgeführt wird, wobei die Fernsprech-Dienstkomponente ferner so konfiguriert ist, dass sie Daten mit den Clientkomponenten in der Protokollschicht austauscht.

3. Umgebung zur Ausführung von Anwendungen nach Anspruch 1 oder nach Anspruch 2, bei der mindestens eine Dienstkomponente eine universelle Dienstkomponente (203) ist, die in der SLEE ausgeführt wird, wobei die universelle Dienstkomponente ferner so konfiguriert ist, dass sie Daten mit speziellen externen Diensten in der Verarbeitungsschicht austauscht.

4. Umgebung zur Ausführung von Anwendungen nach einem der vorhergehenden Ansprüche, bei der die Verbindungs-/Oberflächenschnittstelle Folgendes umfasst:
eine Client-Komponenten-Oberfläche, wobei die Client-Komponenten-Oberfläche eine abstrahierte Schnittstelle für eine Client-Komponente in der Protokollschicht bereitstellt; und
eine der SLEE zugeordnete Verbindung, wobei die Verbindung der Client-Komponenten-Oberfläche entspricht und so konfiguriert ist, dass sie über die abstrahierte Schnittstelle, die durch die Client-Komponenten-Oberfläche bereitgestellt wird, Daten mit der Client-Komponente austauscht.

5. Umgebung zur Ausführung von Anwendungen nach einem der vorhergehenden Ansprüche, die ferner Folgendes umfasst:
einen SLEE-Deskriptor (214), wobei der SLEE-Deskriptor mindestens eine Client-Komponente bezeichnet, mit welcher die SLEE so konfiguriert werden kann, dass sie Daten über eine Verbindungs-/Oberflächenschnittstelle austauscht.

6. Umgebung zur Ausführung von Anwendungen nach einem der vorhergehenden Ansprüche, die ferner Folgendes umfasst:
mindestens einen Client-Komponenten-Deskriptor, wobei jeder Client-Komponenten-Deskriptor einer bestimmten Client-Komponente in der Protokollschicht entspricht und der mindestens eine Client-Komponenten-Deskriptor bestimmte Ereignisse bezeichnet, über welche die bestimmte Clientkomponente durch den Ereignis-Routing-Bus in der SLEE in Kenntnis gesetzt werden kann.

7. Umgebung zur Ausführung von Anwendungen nach einem der vorhergehenden Ansprüche, bei welcher die Client-Komponente ein Protokollstapel ist.

8. Umgebung zur Ausführung von Anwendungen nach einem der Ansprüche 1 bis 6, bei welcher die Client-Komponente aus der Gruppe ausgewählt wird, die aus einer Anrufsteuerungskomponente, einer Signalisierungs-Protokollkomponente, einem Verbindungsverwaltungs-Protokoll und einem Protokoll für sicheren Netzzugriff besteht.

9. Umgebung zur Ausführung von Anwendungen nach einem der vorhergehenden Ansprüche, wobei die SLEE mit dem JAIN-Konzept (Java-APIs für integrierte Netzwerke) kompatibel ist.

10. Umgebung zur Ausführung von Anwendungen nach einem der vorhergehenden Ansprüche, wobei die SLEE ferner Folgendes umfasst:
ein Klassenladeprogramm (224) zum Laden von Dienstkomponenten in die SLEE, wobei die SLEE jede geladene Dienstkomponente registriert, damit diese an bestimmte registrierte Dienstkomponenten gerichtete Ereignisse empfangen können; wobei der Ereignis-Routing-Bus die empfangenen Ereignisse an die in der SLEE ausgeführten bestimmten registrierten Dienstkomponenten weiterleitet.

11. Umgebung zur Ausführung von Anwendungen nach einem der vorhergehenden Ansprüche, wobei die SLEE ferner Folgendes umfasst:
einen Vorrat an ausführbaren Programmsegmenten (thread pool) (222), und
eine Einheit zur Verwaltung des Vorrats an ausführbaren Programmsegmenten zum zuweisen von ausführbaren Programmsegmenten zur Verwendung durch die geladenen Dienstkomponenten.

12. Verfahren zur Bereitstellung von Fernsprechdiensten, wobei das Verfahren die folgenden Schritte umfasst:
in einem Ereignis-Routing-Bus in einer Logikumgebung zur Ausführung von Diensten (SLEE),
Empfangen von Ereignissen der Protokollschicht von Client-Komponenten über eine Verbindungs-/Oberflächenschnittstelle,
Empfangen von Ereignissen der logischen Dienstschicht von Dienstkomponenten, die in der SLEE ausgeführt werden, und
Weiterleiten der betreffenden Ereignisse der Protokollschicht und der Ereignisse der logischen Dienstschicht an Dienstkomponenten und Client-Komponenten, die für den Empfang der betreffenden Ereignisse der Protokollschicht und der logischen Dienstschicht registriert sind; und
wobei mindestens eine Dienstkomponente eine internetfähige Dienstkomponenten IESC ist und wobei die IESC:
mindestens ein Ereignis der logischen Dienstschicht an den Ereignis-Routing-Bus sendet, wobei der Ereignis-Routing-Bus das gesendete Ereignis der logischen Dienstschicht an eine andere Dienstkomponente senden kann, die für den Empfang des gesendeten Ereignisses der logischen Dienstschicht registriert ist;
Empfangen eines Ereignisses der logischen Dienstschicht von einer anderen Dienstkomponente; und
Bereitstellen einer Datenübertragungsverbindung zu einem Server-Zusatzprogramm außerhalb der SLEE als Reaktion auf dem Empfang des Ereignisses der logischen Dienstschicht von der anderen Dienstkomponente.

13. Maschinenlesbarer Speicher, in welchem ein Computerprogramm zum Bereitstellen von Fernsprechdiensten gespeichert ist, wobei das Computerprogramm einen durch eine Maschine ausführbaren Programmcode aufweist, der die Maschine zum Ausführen der Schritte nach Anspruch 12 veranlasst.

## Revendications

1. Un environnement d'exécution d'application, pour un réseau intelligent, comprenant:
un environnement d'exécution logique de service, SLEE, dans une couche logique de service (207), ledit SLEE comprenant un bus d'acheminement d'évènements (218), pour acheminer des évènements entre des composants de service (203, 204, 205) dans la couche logique de service, et des composants clients dans une couche de protocole (202) et une couche d'application (205') ;
au moins un composant client dans la couche de protocole, dans lequel ledit au moins un composant client est relié en communication audit SLEE, par une interface connecteur/boucleur (210, 216) ;
au moins un composant de service, configuré pour communiquer avec d'autres composants de service dans ledit SLEE par ledit bus d'acheminement d'évènements ; et **caractérisé en ce qu'**il comprend
au moins un composant de service validé Internet, IESC (205) s'exécutant, dans ledit SLEE, ledit IESC ayant une configuration pour acheminer et recevoir des évènements vers et depuis d'autres composants de service dans ledit SLEE par ledit bus d'acheminement d'évènements, ledit IESC ayant une liaison de communication vers un programme côté serveur, externe audit SLEE.

2. L'environnement d'exécution d'application selon la revendication 1, dans lequel au moins un composant de service est un composant de service téléphonique (204) s'exécutant dans ledit SLEE, ledit composant de service téléphonique étant en outre configuré pour communiquer avec des composants clients dans la couche protocole.

3. L'environnement d'exécution d'application selon la revendication 1 ou la revendication 2, dans lequel au moins un composant de service est un composant de service générique (203) s'exécutant dans ledit SLEE, dans lequel ledit composant de service générique est en outre configuré pour communiquer avec des services externes spécifiques dans la couche d'application.

4. L'environnement d'exécution d'application selon l'une quelconque des revendications précédentes, dans lequel ladite interface connecteur/boucleur comprend:
un boucleur de composant client, ledit boucleur de composant client fournissant une interface résumée à un composant client dans la couche protocole ; et
un connecteur associé audit SLEE, ledit connecteur correspondant audit boucleur de composant client, dans lequel ledit connecteur est configuré pour communiquer avec ledit composant client par ladite interface résumée fournie par ledit boucleur de composant client.

5. L'environnement d'exécution d'application selon l'une quelconque des revendications précédentes, comprenant en outre:
un descripteur SLEE (214), ledit descripteur SLEE spécifiant au moins un composant client avec lequel ledit SLEE peut être configuré pour communiquer par une interface connecteur/boucleur.

6. L'environnement d'exécution d'application selon l'une quelconque des revendications précédentes, comprenant en outre :
au moins un descripteur de composant client, chaque descripteur de composant client correspondant à un composant client spécifique dans la couche protocole, ledit au moins un descripteur de composant client spécifiant des évènements particuliers pour lesquels ledit composant client spécifique peut être notifié par ledit bus d'acheminement d'évènements dans ledit SLEE.

7. L'environnement d'exécution d'application selon l'une quelconque des revendications précédentes, dans lequel ledit composant client est une pile de protocole.

8. L'environnement d'exécution d'application selon l'une quelconque des revendications 1 à 6, dans lequel ledit composant client est sélectionné dans le groupe composé d'un composant de commande d'appel, un composant de protocole de signalisation, un protocole de gestion de connectivité, et un protocole d'accès sécurisé au réseau.

9. L'environnement d'exécution d'application selon l'une quelconque des revendications précédentes, dans lequel ledit SLEE satisfait au paradigme Java API's for Integrated Networks, JAIN.

10. L'environnement d'exécution d'application selon l'une quelconque des revendications précédentes, dans lequel ledit SLEE comprend en outre :
un chargeur de classe (224) pour charger des composants de service dans le SLEE, le SLEE enregistrant chaque composant de service chargé pour recevoir des évènements dirigés vers des composants de service enregistrés, particuliers ; ledit bus d'acheminement d'évènements acheminant lesdits évènements reçus vers lesdits composants de service enregistrés particuliers s'exécutant dans le SLEE.

11. L'environnement d'exécution d'application selon l'une quelconque des revendications précédentes, dans lequel ledit SLEE comprend en outre :
un groupe de sous-processus (222) et,
un gestionnaire de groupe de sous-processus pour allouer des sous-processus pour utilisation par lesdits composants de service chargés.

12. Un procédé de fourniture de services téléphoniques, comprenant les étapes consistant à :
dans un bus d'acheminement d'évènements, dans un environnement d'exécution logique de service (SLEE),
la réception d'évènements de couche protocole émanant de composants clients, par l'intermédiaire d'une interface connecteur/boucleur,
la réception d'évènements de couche logique de service émanant de composants de service s'exécutant dans ledit SLEE, et
la transmission desdits évènements de couche de protocole particuliers et desdits évènements de couche logiques de service à des composants de service et des composants clients enregistrés, pour recevoir ladite couche de protocole particulière et lesdits évènements de couche logiques de service; et
dans lequel au moins un composant de service est un composant de service validé Internet, IESC, ledit IESC :
envoyant au moins un évènement de couche logique de service audit bus d'acheminement d'évènements, dans lequel ledit bus d'acheminement d'évènements peut transmettre ledit évènement de couche logique de service envoyé à un autre composant de service enregistré, pour recevoir ledit évènement de couche logique de service envoyé ;
recevoir un évènement de couche logique de service venant d'un autre composant de service ; et
en réponse à la réception dudit évènement de couche logique de service de la part d'un dit autre composant de service, fournir une liaison de communication à un programme de côté serveur, externe audit SLEE.

13. Un stockage lisible par machine, sur lequel est stocké un programme pour ordinateur pour fournir des services téléphoniques, ledit programme pour ordinateur comprenant du code de programme, exécutable par une machine pour que la machine accomplisse les étapes de la revendication 12.
